# EUROPÄISCHE PATENTANMELDUNG

(11) **EP 3 736 255 A1**
(43) Veröffentlichungstag der Anmeldung: **11.11.2020**
(21) Anmeldenummer: 20172147.9
(22) Anmeldetag: 29.04.2020
(51) Int. Cl.: C04B 35/573, C04B 35/626, C04B 35/634, C04B 35/80

(54) **VERFAHREN ZUR HERSTELLUNG EINES CARBIDKERAMISCHEN FASERVERBUNDMATERIALS UND CARBIDKERAMISCHES BAUTEIL**

(30) Priorität: 06.05.2019 DE 102019111701
(71) Anmelder: Deutsches Zentrum für Luft- und Raumfahrt e.V., 51147 Köln (DE)
(72) Erfinder: MAINZER, Bernd, 70184 Stuttgart (DE); KÜTEMEYER, Marius, 75181 Pforzheim (DE)
(74) Vertreter: Hoeger, Stellrecht & Partner Patentanwälte mbB

(57) **Zusammenfassung**

Es wird ein Verfahren zur Herstellung eines carbidkeramischen Faserverbundmaterials (40) bereitgestellt, welches das Infiltrieren einer Fasereinrichtung mit einem Lösungsmittel (46) umfasst, wobei die Fasereinrichtung Fasern (45) und ein Polymerharz (48) umfasst und wobei das Lösungsmittel (46) einen Siedepunkt aufweist, welcher größer ist als eine Polymerisationstemperatur des Polymerharzes (48), wobei das Verfahren ferner das Durchführen einer Pyrolyse an der mit dem Lösungsmittel (46) infiltrierten Fasereinrichtung umfasst, wobei ein poröser Faservorkörper (35) hergestellt wird, und wobei das Verfahren ferner das Durchführen einer Carbidbildner-Infiltration an dem porösen Faservorkörper (35) umfasst, wobei ein Faserverbundmaterial (40) entsteht, dessen Faserfilamente (19) und/oder Faserbündel (16) in einer Carbid-Matrix (20) angeordnet sind.

## Beschreibung

Die Erfindung betrifft ein Verfahren zur Herstellung eines carbidkeramischen Faserverbundmaterials.

Die Erfindung betrifft ferner ein weiteres Verfahren zur Herstellung eines carbidkeramischen Faserverbundmaterials.

Weiter betrifft die Erfindung ein carbidkeramisches Bauteil.

Aus der EP 2 046 700 B1 ist ein Verfahren zur Herstellung einer Verbundstruktur oder eines Abschnitts einer Verbundstruktur eines Bremsbandes einer Bremsscheibe bekannt. Das Verfahren umfasst das Herstellen einer Verbundkeramikstruktur, welche Kohlenstofffasern, Silizium und Siliziumcarbide umfasst, wodurch ein Körper eines Bremsbandes erhalten wird, der wenigstens eine Bremsfläche aufweist. Das Verfahren umfasst ferner ein Bearbeiten der Bremsfläche, wobei eine Schicht der Oberfläche derart entfernt wird, dass Kohlenstoff, der nicht mit Silizium gebunden ist, an der Oberfläche vorhanden ist. Weiter umfasst das Verfahren ein wenigstens teilweises Entfernen des Kohlenstoffs, der nicht mit Silizium gebunden ist, von der Oberfläche und das Aufbringen einer Schutzbeschichtung auf der Bremsfläche, wobei der Schritt des Entfernens des Kohlenstoffs, der nicht mit Silizium gebunden ist, durch Reinigen der Bremsflächen mit einem Schleifmittelstrahl oder durch Abbrennen der Bremsflächen ausgeführt wird.

Die US 2002/0179225 A1 offenbart ein Verfahren zur Herstellung einer Faserverstärkten keramischen Strukturkomponente, welche Hochtemperatur-stabile Fasern umfasst, die reaktionsgebunden mit einer Siliziumcarbid-Matrix sind.

Die DE 199 44 345 A1 offenbart einen mit Faserbündeln verstärkten Verbundwerkstoff mit einer keramischen Matrix, welcher Faserbündel beinhaltet, die aus zwei verschiedenen Anteilen bestehen, die eine unterschiedliche mittlere Faserbündellänge aufweisen.

Aus der DE 10 2011 001 065 A1 ist ein carbidkeramischer Werkstoff bekannt, welcher durch Carbidbildner-Infiltration eines porösen Kohlenstoff-enthaltenden Vorkörpers hergestellt ist und einen Massenanteil von freiem Kohlenstoff kleiner als 1% und einen Massenanteil von freiem Carbidbildner kleiner als 1% aufweist.

Die DE 100 11 013 A1 offenbart ein Verfahren zur Herstellung eines Kohlenstoffschaums, welches die Schritte Versetzen eines carbonisierbaren Ausgangspolymers mit einem Treibmittel, Aufschäumen der so gewonnenen Mischung und anschließendes Pyrolysieren der Mischung umfasst.

Der Erfindung liegt die Aufgabe zugrunde, ein Verfahren bereitzustellen, mit welchem sich auf einfache Weise ein carbidkeramisches Faserverbundmaterial herstellen lässt und bei welchem ein Anteil an freiem Kohlenstoff möglichst gering ist.

Diese Aufgabe wird durch ein Verfahren zur Herstellung eines carbidkeramischen Faserverbundmaterials gelöst, wobei das Verfahren umfasst:
- Infiltrieren einer Fasereinrichtung mit einem Lösungsmittel, wobei die Fasereinrichtung Fasern und ein Polymerharz umfasst und wobei das Lösungsmittel einen Siedepunkt aufweist, welcher größer ist als eine Polymerisationstemperatur des Polymerharzes;
- Durchführen einer Pyrolyse an der mit dem Lösungsmittel infiltrierten Fasereinrichtung, wobei ein poröser Faservorkörper hergestellt wird; und
- Durchführen einer Carbidbildner-Infiltration an dem porösen Faservorkörper, wobei ein Faserverbundmaterial entsteht, dessen Faserfilamente und/oder Faserbündel in einer Carbid-Matrix angeordnet sind.

Durch das Infiltrieren mit einem Lösungsmittel, dessen Siedepunkt größer ist als die Polymerisationstemperatur des Polymerharzes, wird das Lösungsmittel bei einer Herstellung eines Ausgangsmaterials für die Pyrolyse zunächst in flüssiger Form, insbesondere fein verteilt, eingeschlossen. Erst während der Pyrolyse sind die Temperaturen so hoch, dass das Lösungsmittel verdampft und/oder entweicht, wodurch eine Porosität in dem Faservorkörper gebildet wird.

Der poröse Faservorkörper weist durch das gleichmäßige Entweichen des Lösungsmittels insbesondere eine feine Porenverteilung auf. Es lässt sich eine Art von Nanoschwamm oder Nanoschaum als poröser Faservorkörper herstellen.

Durch die poröse Struktur des porösen Faservorkörpers lässt sich insbesondere eine homogene Carbidbildner-Infiltration durchführen.

Die Fasereinrichtung und das Lösungsmittel bilden vorzugsweise ein Ausgangsmaterial für den porösen Faservorkörper und/oder für die Pyrolyse.

Es kann vorgesehen sein, dass das Ausgangsmaterial bereits vor der Pyrolyse eine Porosität und/oder Schaumstruktur aufweist.

Bei dem Polymerharz handelt es sich vorzugsweise um ein Phenolharz.

Der poröse Faservorkörper ist vorzugsweise ein kohlenstoffhaltiger Vorkörper mit Kohlenstofffasern.

Der poröse Faservorkörper ist insbesondere ein offenporöser Faservorkörper beziehungsweise weist eine Offenporosität auf.

Alternativ oder ergänzend kann vorgesehen sein, dass Wände zwischen (geschlossenen) Poren derart dünn ausgebildet sind, dass bei der Carbidbildner-Infiltration Carbidbildner durch die Wände hindurchtreten und/oder sich durchfressen kann. Es entsteht dadurch gewissermaßen bei der Carbidbildner-Infiltration eine Art von Offenporosität.

Bei beiden Alternativen - einer offenporösen Ausbildung des porösen Faservorkörpers sowie bei durch dünne Wände zwischen Poren tretendem Carbidbildner - wird eine Carbidbildner-Infiltration ermöglicht, bei welcher im Wesentlichen der gesamte Kohlenstoff im Faservorkörper (abgesehen von in den Fasern enthaltenem Kohlenstoff) zu Carbid reagiert.

In der Regel umfassen die Fasern Faserbündel - sogenannte Rovings - welche sich aus einer Mehrzahl von Faserfilamenten zusammensetzen. Die Fasern sind vorzugsweise aus Kohlenstofffaserbündeln gebildet oder umfassen Kohlenstofffaserbündel.

Vorzugsweise ist das Lösungsmittel ein Alkohol.

Insbesondere ist das Lösungsmittel Furfurylalkohol, Isopropanol oder eine Mischung daraus.

Ergänzend oder alternativ kann das Lösungsmittel chemische Schaumbildner umfassen oder daraus gebildet sein.

Furfurylalkohol ist mit einem Siedepunkt von circa 170°C besonders gut als Lösungsmittel geeignet. Eine Aushärtungsreaktion des Polymerharzes wird insbesondere in einem Bereich von circa 140°C bis circa 160°C, beispielsweise bei circa 150°C, durchgeführt. Während der Aushärtungsreaktion wird der Furfurylalkohol in flüssiger Form, insbesondere fein verteilt, in das aushärtende Polymerharz eingeschlossen und siedet erst bei der Pyrolyse.

Die Pyrolyse wird vorzugsweise bei circa 1200°C oder mehr, beispielsweise bei circa 1600°C, - also deutlich oberhalb des Siedepunkts von Furfurylalkohol - durchgeführt.

Günstig kann es sein, wenn ein Massenanteil des Lösungsmittels in einem Ausgangsmaterial für den porösen Faservorkörper, umfassend die Fasereinrichtung und das Lösungsmittel, mindestens 10 % beträgt.

Gemäß einer bevorzugten Ausführungsform werden die Fasern mit dem Polymerharz und dem Lösungsmittel infiltriert und es wird - wie bereits erwähnt - in einer Aushärtungsphase eine Aushärtungsreaktion des Polymerharzes durchgeführt. Die Aushärtungsreaktion des Polymerharzes wird insbesondere unter Druck durchgeführt.

Alternativ kann vorgesehen sein, dass sogenannte "Prepregs", also mit einem Polymerharz vorimprägnierte Fasern, verwendet werden.

Wie eingangs erwähnt, betrifft die vorliegende Erfindung ferner ein weiteres Verfahren zur Herstellung eines carbidkeramischen Faserverbundmaterials, wobei das Verfahren umfasst:
- Herstellen eines porösen Faservorkörpers unter Verwendung eines kohlenstoffhaltigen granularen Materials und Fasern, wobei das kohlenstoffhaltige granulare Material und die Fasern pyrolysiert werden; und
- Durchführen einer Carbidbildner-Infiltration an dem porösen Faservorkörper, wobei ein Faserverbundmaterial entsteht, dessen Faserfilamente und/oder Faserbündel in einer Carbid-Matrix angeordnet sind.

Ein Polymerharz ist insbesondere entbehrlich.

Je nach Anwendungsfall kann jedoch auch vorgesehen sein, dass granulares Material und eine Fasereinrichtung pyrolysiert werden.

Das kohlenstoffhaltige granulare Material ist vorzugsweise ein Pulver und umfasst insbesondere eines oder mehrere der folgenden Materialien in Pulverform oder ist daraus gebildet: Siliziumcarbid, Aktivkohle.

Vorteilhaft kann es sein, wenn das kohlenstoffhaltige granulare Material als lose Schüttung um die Fasern herum angeordnet wird, bevor die Pyrolyse durchgeführt wird.

Die nachfolgend aufgeführten Merkmale und/oder Vorteile gelten für beide Verfahren gleichermaßen.

Es kann vorgesehen sein, dass die Carbid-Matrix freien Carbidbildner, welcher nicht mit Kohlenstoff regiert hat, umfasst.

Vorzugsweise ist die Carbid-Matrix frei von freiem Kohlenstoff oder arm an freiem Kohlenstoff.

Insbesondere ist zwischen den Faserfilamenten und/oder Faserbündeln in dem Faserverbundmaterial im Wesentlichen keine freie Kohlenstoffphase vorhanden.

Günstig kann es sein, wenn eine Vereinzelung von Faserfilamenten einer Faserverstärkung stattfindet. Insbesondere bleiben Faserfilamente in dem resultierenden carbidkeramischen Faserverbundmaterial erhalten. Eine Schädigung der Faserfilamente wird insbesondere vermieden.

Der poröse Faservorkörper wird insbesondere als Schwammkörper oder Schaumkörper und insbesondere als Nanoschwammkörper oder Nanoschaumkörper hergestellt.

Eine Porosität des porösen Faservorkörpers beträgt vorzugsweise mindestens 10 Volumen-%, insbesondere mindestens 15 Volumen-%, insbesondere mindestens 20 Volumen-%, bezogen auf ein Gesamtvolumen des porösen Faservorkörpers, insbesondere ohne einen Volumenanteil einer Faserverstärkung.

Vorzugsweise umfasst der poröse Faservorkörper Poren mit einem mittleren Porendurchmesser, welcher kleiner oder gleich 20 µm ist und insbesondere kleiner oder gleich 15 µm ist und insbesondere kleiner oder gleich 10 µm ist.

Vorzugsweise werden die Fasern durch Faserbündel mit einer Mehrzahl von Faserfilamenten hergestellt.

Ein Faserbündel umfasst vorzugsweise circa 3000 bis circa 12000 Faserfilamente.

Es kann vorgesehen sein, dass ein mittlerer Porendurchmesser im porösen Faservorkörper mindestens näherungsweise kleiner als ein Faserdurchmesser ist oder mindestens näherungsweise dem Faserdurchmesser entspricht. Der Faserdurchmesser bezeichnet vorzugsweise einen Durchmesser eines Faserfilaments.

Vorteilhaft kann es sein, wenn die Fasern ein Gewebe, ein Gelege, ein Gewirke und/oder Kurzfasern umfassen. Die Fasern sind insbesondere aus einer Mehrzahl von Faserfilamenten zusammengesetzt.

Beispielsweise sind das Gewebe, das Gelege, das Gewirke und/oder die Kurzfasern aus Faserbündeln mit einer Mehrzahl von Faserfilamenten zusammengesetzt.

Gemäß einer bevorzugten Ausführungsform wird als Carbidbildner Silizium verwendet. Es lässt sich so insbesondere ein C/SiC-Material herstellen. Grundsätzlich sind aber auch andere Carbidbildner, wie beispielsweise Titan oder Wolfram, für das Verfahren geeignet.

Das erfindungsgemäße Faserverbundmaterial weist vorzugsweise eine erhöhte Wärmeleitfähigkeit, eine erhöhte Hochtemperaturoxidationsbeständigkeit und/oder eine erhöhte Abrasionsbeständigkeit auf.

Wie eingangs erwähnt, betrifft die vorliegende Erfindung ferner ein carbidkeramisches Bauteil, wobei das carbidkeramische Bauteil ein Faserverbundmaterial, welches nach einem erfindungsgemäßen Verfahren hergestellt ist, umfasst oder daraus besteht.

Günstig kann es sein, wenn das carbidkeramische Bauteil eine Biegefestigkeit von mindestens 150 MPa aufweist.

Vorzugsweise weist das carbidkeramische Bauteil eine Bruchdehnung im Biegeversuch von mindestens 0,15 %, insbesondere von mindestens 0,2 %, auf.

Die im Zusammenhang mit dem erfindungsgemäßen Verfahren genannten Merkmale und/oder Vorteile gelten für das erfindungsgemäße carbidkeramische Bauteil vorzugsweise gleichermaßen.

Ein carbidkeramisches Bauteil lässt sich vorteilhafterweise als Bremsscheibe beziehungsweise als Teil einer Bremsscheibe verwenden.

Alternativ lässt sich das carbidkeramische Bauteil auch als Hitzeschild bei Raumfahrtanwendungen, wie beispielsweise für den Wiedereintritt in die Erdatmosphäre, oder allgemein im Bereich der Luftfahrt, beispielsweise in Triebwerkskomponenten, einsetzen.

Weitere bevorzugte Anwendungsbereiche für das erfindungsgemäße carbidkeramische Faserverbundmaterial sind die Energietechnik, beispielsweise Infusionsreaktoren oder Solaröfen, Gleitlager in unterschiedlichen Bereichen, Brennkammern und Verbrennungsanlagen.

Die nachfolgende Beschreibung bevorzugter Ausführungsformen dient im Zusammenhang mit den Zeichnungen der näheren Erläuterung der Erfindung.

Es zeigen:
- Figur 1: eine schematische Schnittdarstellung eines Ausführungsbeispiels eines erfindungsgemäßen Faserverbundmaterials als C/SiC-Werkstoff;
- Figur 2: eine Rasterelektronenmikroskopieaufnahme eines Schliffbilds eines erfindungsgemäßen C/SiC-Werkstoffs;
- Figur 3: eine schematische Schnittdarstellung eines eines C/C-SiC-Werkstoffs aus dem Stand der Technik;
- Figur 4: eine Rasterelektronenmikroskopieaufnahme eines Schliffbilds eines C/C-SiC-Werkstoffs gemäß der Schnittdarstellung aus Figur 3;
- Figur 5: eine schematische Darstellung einer Ausführungsform eines erfindungsgemäßen Verfahrens zur Herstellung eines Faserverbundmaterials;
- Figur 6: eine schematische Darstellung einer weiteren Ausführungsform eines erfindungsgemäßen Verfahrens zur Herstellung eines Faserverbundmaterials;
- Figur 7: eine Rasterelektronenmikroskopieaufnahme (nach Bildbearbeitung) eines Schliffbilds eines porösen Faservorkörpers mit Kohlenstofffasern zwischen Faserbündeln nach einer Pyrolyse, wobei der poröse Faservorkörper schwammartig ist und mit Carbidbildner infiltrierbar ist;
- Figur 8: eine schematische Schnittdarstellung einer Struktur eines porösen Faservorkörpers, bei welchem ein kohlenstoffhaltiger Schaum um Faserfilamente herum angeordnet ist; und
- Figur 9: eine schematische Schnittdarstellung einer Struktur eines porösen Faservorkörpers, bei welchem ein granulares Material um Faserfilamente herum angeordnet ist.

Gleiche oder funktional äquivalente Elemente sind in sämtlichen Figuren mit denselben Bezugszeichen versehen.

Es wird ein carbidkeramisches Faserverbundmaterial 40 bereitgestellt, welches vorliegend ein carbidkeramisches Bauteil 50 bildet. Das Faserverbundmaterial 40 weist eine Faserverstärkung 10 auf.

In dem carbidkeramischen Faserverbundmaterial 40 liegt - zumindest im Bereich der Faserverstärkung 10 - im Wesentlichen keine freie Kohlenstoffphase vor.

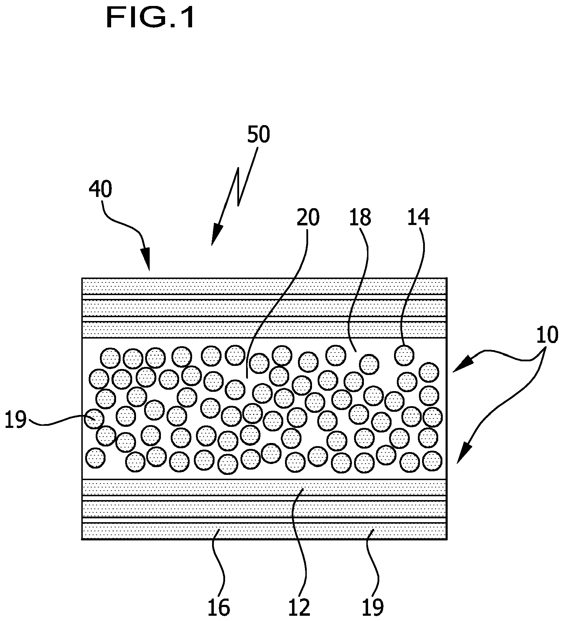

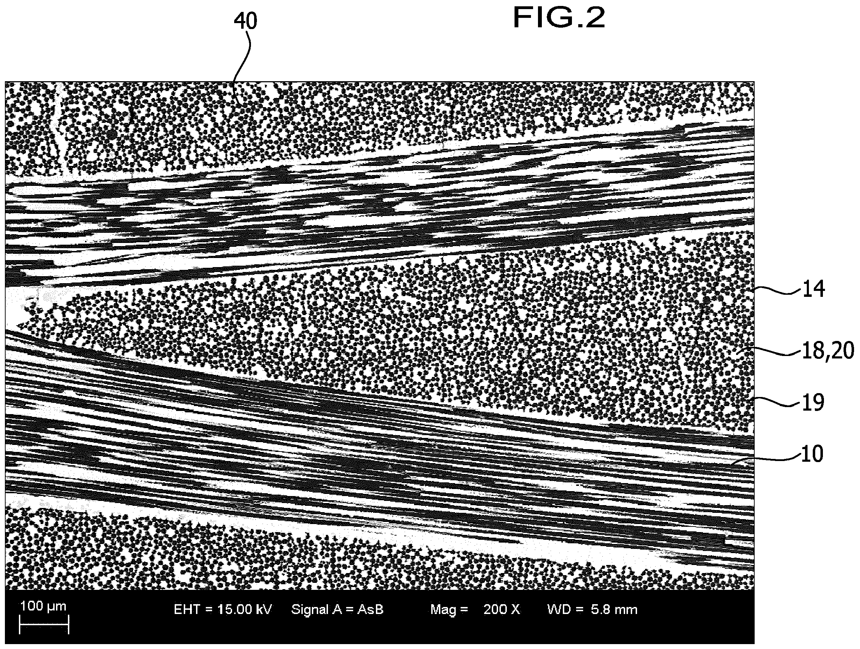

Die Faserverstärkung 10 umfasst vorzugsweise Kohlenstofffasern, insbesondere in Form von Faserbündeln 16 - sogenannte Rovings - welche in einer 0°-Orientierung 12 und einer 90°-Orientierung 14 bezogen auf eine Ansichtsrichtung angeordnet sind (vgl. Figuren 1 und 2).

Die Faserbündel 16 umfassen beispielsweise circa 3000 einzelne Faserfilamente 19, von welchen in den Figuren 1 und 2 ein Ausschnitt dargestellt ist.

Die einzelnen Faserfilamente 19 sind von einer Carbid-Matrix 20 und/oder freiem Carbidbildner 18 aufgenommen und/oder darin eingebettet.

Der freie Carbidbildner 18 hat nicht mit Kohlenstoff reagiert und bildet einen Teil der Carbid-Matrix 20. Die Carbid-Matrix 20 enthält Carbid, welches durch eine Reaktion von Carbidbildner und Kohlenstoff entstanden ist und/oder - wie erwähnt - freien Carbidbildner, welcher nicht mit Kohlenstoff reagiert hat.

Wie bereits erwähnt, enthält das Faserverbundmaterial 40 im Bereich der Faserbündel 16 vorliegend keine freie Kohlenstoffphase.

Außerhalb eines Bereichs, in welchem die Faserbündel 16 angeordnet sind, kann grundsätzlich eine freie Kohlenstoffphase mit einem geringen Volumenanteil vorliegen.

Ein Durchmesser eines Faserfilaments 19 beträgt typischerweise circa 10 µm.

Wie bereits erwähnt, hat das Faserbündel 16 vorliegend 3000 Faserfilamente 19, wobei dies typischerweise als 3 K bezeichnet wird. Grundsätzlich sind Faserbündel 16 mit einem Wert von 3 K bis 12 K besonders geeignet. Eine weitere charakteristische Angabe für Faserbündel ist deren Feinheit, wobei eine längenbezogene Masse in tex angegeben wird. Ein tex entspricht 1 g/1000 m.

In Figur 2 ist eine Rasterelektronenmikroskopieaufnahme eines Schliffbilds eines erfindungsgemäß hergestellten Faserverbundmaterials 40 gezeigt. Die Aufnahme wurde bei einer Beschleunigungsspannung von 15 kV mit einer 200-fachen Vergrößerung aufgenommen.

Als Carbidbildner wurde vorliegend Silizium verwendet. Die Faserverstärkung 10 ist vorliegend aus Kohlenstoff-Faserbündeln. Die einzelnen Faserfilamente 19 sind in dem mit einem Rasterelektronenmikroskop aufgenommenen Bild dunkel abgebildet, während das während einer Reaktion zwischen Kohlenstoff und Carbidbildner entstandene Siliziumcarbid vom Rasterelektronenmikroskop hell abgebildet wird.

Aus Figur 2 ist ersichtlich, dass neben den Faserfilamenten 19 keine freie Kohlenstoffphase vorliegt, da keine dunklen Bereiche mit einem vergleichbaren Kontrast wie der Kohlenstoff abgebildet sind. Um die einzelnen Faserfilamente 19 herum ist eine Carbid-Matrix 20 (vorliegend Siliziumcarbid) und/oder freier Carbidbildner 18 angeordnet.

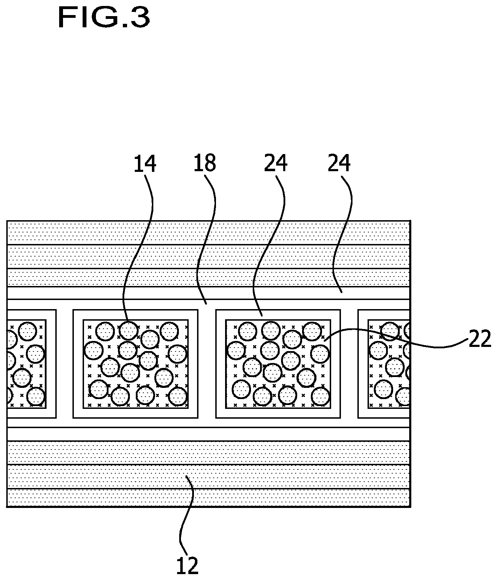

Im Vergleich hierzu ist in Figur 3 ein aus dem Stand der Technik bekanntes C/C-SiC-Material in einer schematischen Schnittdarstellung gezeigt. Die Kreuze deuten eine freie Kohlenstoffphase 22 an. Neben der freien Kohlenstoffphase 22 liegt auch eine Carbid-Matrix 24 vor, wodurch sich eine blockartige Struktur ergibt.

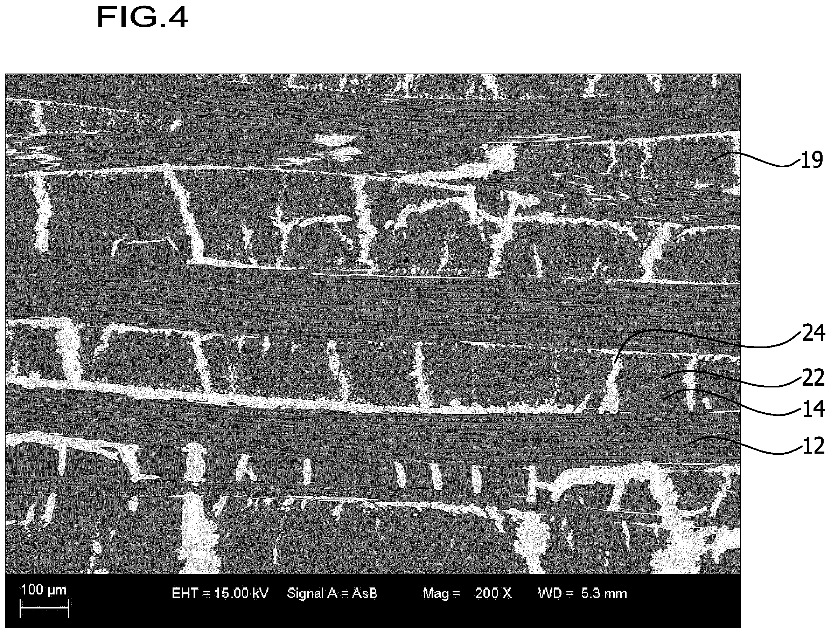

In Figur 4 ist eine entsprechende Rasterelektronenmikroskopieaufnahme eines Schliffbildes eines Materials aus dem Stand der Technik gezeigt. Die Aufnahme wurde mit einer Beschleunigungsspannung von 15 kV bei einer 200-fachen Vergrößerung aufgenommen - entsprechend dem in Figur 2 dargestellten Schliffbild des erfindungsgemäßen Faserverbundmaterials 40.

Um die Faserfilamente 19 herum sind dunklere Bereiche zu sehen, welche von der freien Kohlenstoffphase 22 resultieren.

Bei der Pyrolyse ist es zu einer Rissbildung gekommen. Durch diese Risse kann der Carbidbildner bei einer Carbidbildner-Infiltration leichter in den Körper eindringen. An Stellen, an welchen die Risse waren, entsteht daher vermehrt Carbid.

Die Carbid-Matrix 24 ist - im Unterschied zu dem erfindungsgemäßen Faserverbundmaterial 40 - nicht um die einzelnen Faserfilamente 19 herum angeordnet, sondern bildet eine Art Rahmen für die Blöcke aus Faserfilamenten 19 und freier Kohlenstoffphase 22.

Bei dem erfindungsgemäßen Faserverbundmaterial 40 (Figuren 1 und 2) ist durch die fehlende freie Kohlenstoffphase die Korrosionsbeständigkeit in Faserbündeln 16 im Vergleich zu dem Material aus dem Stand der Technik gemäß den Figuren 3 und 4 erhöht.

Ferner ergibt sich durch die Carbid-Matrix 20, deren Volumenanteil im Vergleich zu dem Material gemäß den Figuren 3 und 4 aufgrund der fehlenden freien Kohlenstoffphase erhöht ist, eine höhere Wärmeleitfähigkeit und eine größere Härte.

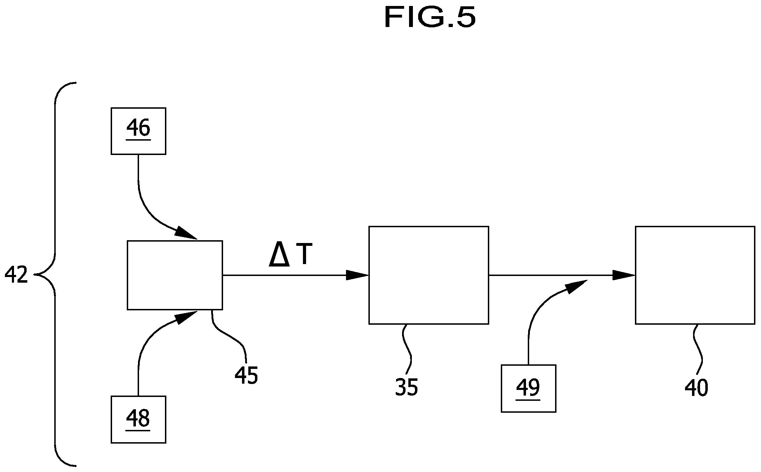

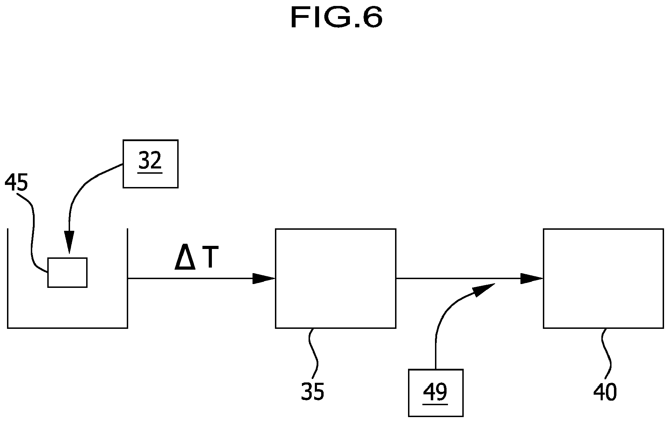

Ausführungsbeispiele zur Herstellung eines erfindungsgemäßen Faserverbundmaterials 40, bei welchem im Bereich der Faserfilamente 19 im Wesentlichen keine freie Kohlenstoffphase vorhanden ist, sind in den Figuren 5 und 6 schematisch dargestellt.

Es wird zunächst ein poröser Faservorkörper 35 hergestellt. Dieser poröse Faservorkörper 35 umfasst Fasern 45, welche von einer porösen, insbesondere offenporösen Struktur, umgeben und/oder aufgenommen sind.

Der poröse Faservorkörper 35 kann gemäß zwei alternativen Ausführungsformen hergestellt werden.

Gemäß einer ersten in Figur 5 dargestellten Alternative werden Fasern 45 mit einem Lösungsmittel 46 und einem Polymerharz 48, insbesondere einem Phenolharz, infiltriert. Als Phenolharz hat sich beispielsweise Novolac als besonders geeignet erwiesen.

Als Fasern 45 sind beispielsweise Fasergebilde, beispielsweise Gewebe, Gelege, Gewirke, insbesondere aus Faserbündeln geeignet.

Als Lösungsmittel 46 wird beispielsweise Furfurylalkohol verwendet. Furfurylalkohol siedet bei einer Temperatur, welche größer als eine Temperatur ist, bei der eine Aushärtungsphase des Polymerharzes 48 durchgeführt wird und bei welcher das Polymerharz 48 polymerisiert.

Ein Massenanteil des Lösungsmittels 46 beträgt beispielsweise 10 % bezogen auf eine Gesamtmasse eines Ausgangsmaterials 42. Das Ausgangsmaterial 42 wird von der Fasereinrichtung und dem Lösungsmittel 46 gebildet. Die Fasereinrichtung umfasst die Fasern 45 und das Polymerharz 48.

Bei einem Ausführungsbeispiel liegt der Massenanteil des Lösungsmittels, welches insbesondere Furfurylalkohol ist, bei circa 50 % bezogen auf das Ausgangsmaterial 42.

Das Polymerharz 48 wird dann, insbesondere mit Formgebung, unter Druck ausgehärtet. Der Druck liegt typischerweise in einem Bereich von 15 bar bis 20 bar. Dabei härtet das Polymerharz 46 um die Fasern 45, insbesondere um deren Faserfilamente 19, aus, während das Lösungsmittel 46 fein verteilt in flüssiger Form in dem ausgehärteten Polymerharz 48 eingeschlossen wird.

Die Druckbeaufschlagung unterdrückt insbesondere ein Aufschäumen während der Aushärtungsphase. Unter Druckbeaufschlagung wird das Lösungsmittel 46 fein verteilt in dem ausgehärteten und/oder aushärtenden Polymerharz 48 eingelagert. Dies sorgt später für eine fein verteilte Porosität zur Herstellung einer Schaumstruktur oder Schwammstruktur.

Es hat sich gezeigt, dass bei einer Aushärtung unter Normaldruck bereits während der Aushärtungsphase ein starkes Aufschäumen erfolgt.

Die Aushärtung erfolgt beispielsweise in einem Autoklaven oder es wird über ein RTM (Resin Transfer Molding)-Verfahren ein entsprechender Kohlenstoffkörper hergestellt.

Es kann vorgesehen sein, dass bereits das ausgehärtete Polymerharz 48 eine Porosität und/oder Schaumstruktur aufweist, beispielsweise durch Verwendung eines Polyurethanschaums. Dies ist für das erfindungsgemäße Verfahren jedoch nicht zwingend notwendig.

Das um die Fasern 45 ausgehärtete Polymerharz 48 mit dem eingeschlossenen Lösungsmittel 46 wird anschließend einer Pyrolyse unterzogen. Die Pyrolyse wird beispielsweise für eine bestimmte Zeit unter Sauerstoffausschluss bei einer Temperatur von 900°C oder mehr, insbesondere circa 1400°C oder 1600°C, durchgeführt.

Während der Pyrolyse entsteht der poröse Faservorkörper 35, da das eingeschlossene Lösungsmittel 46 durch die hohen Temperaturen entweicht.

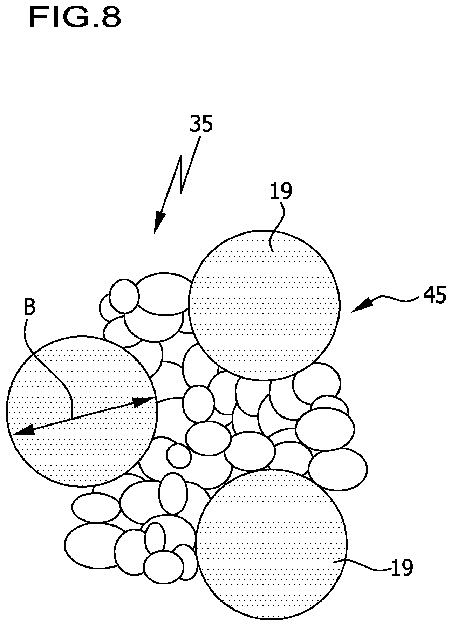

Die Struktur des porösen Faservorkörpers 35, welcher gemäß der ersten Alternative hergestellt wurde, ist in Figur 8 dargestellt. Hierauf wird später noch eingegangen.

Der poröse Faservorkörper 35 wird anschließend mit Carbidbildner 49 - vorliegend Silizium - infiltriert.

Zur Carbidbildner-Infiltration wird eine Schmelzphasen-Infiltration eingesetzt. Der Carbidbildner 49 wird auf eine Temperatur, welche größer als der Schmelzpunkt des Carbidbildners 49 ist, erhitzt, wodurch der Carbidbildner 49 flüssig wird. Der flüssige Carbidbildner 49 infiltriert dann - durch KapillarKräfte begünstigt - den porösen Faservorkörper 35.

Der flüssige und/oder erstarrende Carbidbildner 49 reagiert mit dem in dem porösen Faservorkörper 35 enthaltenen Kohlenstoff zu Carbid und bildet die im Zusammenhang mit den Figuren 1 und 2 beschriebene Carbid-Matrix 20.

Beispielsweise erfolgt die Carbidbildner-Infiltration gemäß dem LSI (Liquid Silicon Infiltration) Verfahren.

Innerhalb oder separat von der Carbid-Matrix 20 verbleibt gegebenenfalls freier Carbidbildner. Gegebenenfalls kann - wie bereits erwähnt - in Bereichen, in welche keine Faserbündel 16 angeordnet sind, Restkohlenstoff vorhanden sein.

Der poröse Faservorkörper 35 ist entweder offenporös ausgebildet oder die Wände zwischen den Poren sind so dünn, dass flüssiges Silizium - welches vorliegend als Carbidbildner 49 eingesetzt wird - durch die Wände hindurchtritt und so den gesamten porösen Faservorkörper 35 infiltriert.

Die hohe Porosität des porösen Faservorkörpers 35 sorgt dafür, dass keine freie Kohlenstoffphase in Bereichen, in welchen Faserbündel 16 angeordnet sind, verbleibt.

Gemäß der in Figur 6 dargestellten zweiten Alternative zur Herstellung eines Faserverbundmaterials 40 werden Fasern 45 in einem Behälter platziert, in welchen anschließend kohlenstoffhaltiges granulares Material 32, beispielsweise eine Mischung aus Siliziumcarbidpulver und Aktivkohlepulver, eingefüllt wird. Das granulare Material 32 umschließt insbesondere die Fasern 45.

Auch gemäß der zweiten Alternative wird wie im Zusammenhang mit der ersten Alternative eine Pyrolyse für eine bestimmte Zeit bei den genannten Temperaturen unter Sauerstoffausschluss durchgeführt.

Durch den Einschluss von Luft zwischen einzelnen Partikeln 30, welche während der Pyrolyse entweicht, entsteht während der Pyrolyse analog zur ersten Alternative ein poröser Faservorkörper 35.

Die Partikel 30 des granularen Materials 32 weisen vorzugsweise eine Größe auf, welche in einer Größenordnung des Durchmessers der Poren liegt.

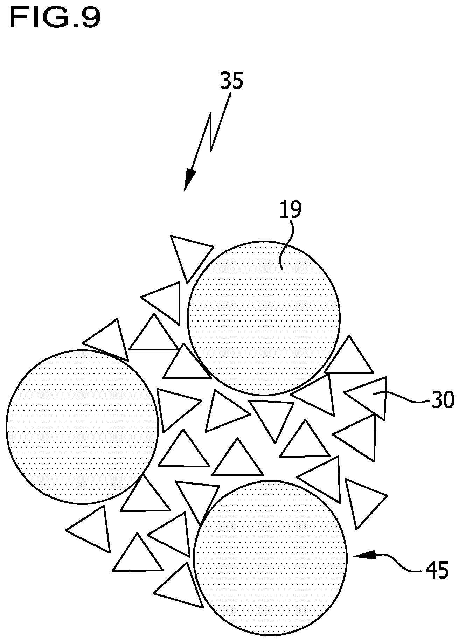

Die Struktur des porösen Faservorkörpers 35, welcher gemäß der zweiten Alternative hergestellt wurde, ist in Figur 9 dargestellt. Hierauf wird später noch eingegangen.

Eine nachfolgende Carbidbildner-Infiltration des basierend auf granularem Material 32 hergestellten porösen Faservorkörpers 35 wird wie die Carbidbildner-Infiltration des basierend auf einer Lösungsmittel-Infiltration hergestellten porösen Faservorkörpers 35 durchgeführt (vgl. Figur 5), sodass insoweit auf die entsprechenden Ausführungen Bezug genommen wird.

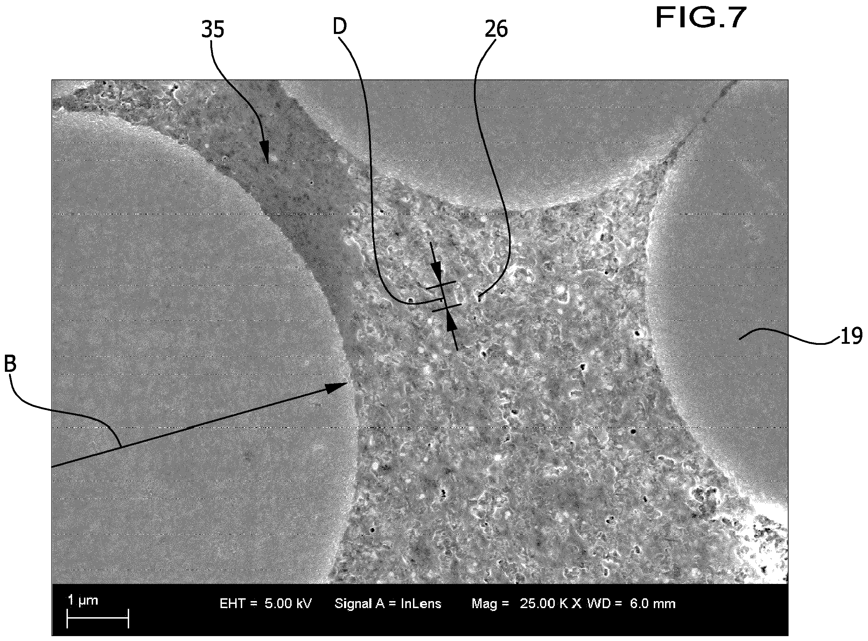

In Figur 7 ist eine Rasterelektronenmikroskopieaufnahme eines Schliffbildes eines porösen Faservorkörpers 35 gezeigt. Die Aufnahme wurde mit einer Beschleunigungsspannung von 5 kV und einer 25-tausendfachen Vergrößerung aufgenommen. Das Originalbild wurde dabei über Farbumkehr und eine Tonwertkorrektur bearbeitet.

Es sind Faserfilamente 19 und eine poröse Struktur mit Poren 26 auf dem Bild zu erkennen. Diese Poren 26 weisen einen kleineren Porendurchmesser D auf als der entsprechende Faserdurchmesser B.

Alternativ liegt der mittlere Porendurchmesser D in der Größenordnung eines Faserdurchmessers B (typischerweise circa 10 µm) von Faserfilamenten 16. Vorzugsweise ist der mittlere Durchmesser D der Poren mindestens näherungsweise kleiner als oder gleich dem Faserdurchmesser B.

In Figur 7 ist lediglich ein Bereich des Faserdurchmessers B gezeigt.

Ein Porenanteil in dem porösen Faservorkörper 35 beträgt vorzugsweise mindestens 10 Volumen-% bezogen auf ein Gesamtvolumen des porösen Faservorkörpers 35 (ohne Fasern 45).

Wenn beispielsweise ein Faseranteil von 50 % vorhanden ist, dann ist vorzugsweise der Volumenanteil von Poren 26 im porösen Faservorkörper 35 mindestens 20 %.

Wie bereits erwähnt, ist das Ergebnis des erfindungsgemäßen Verfahrens zumindest im Bereich, in welchem Faserbündel 16 und/oder Faserfilamente 19 angeordnet sind, ein carbidkeramisches Faserverbundmaterial 40, welches im Wesentlichen keine freie Kohlenstoffphase aufweist, beziehungsweise ein ebensolches carbidkeramisches Bauteil 50.

Dadurch, dass keine freie Kohlenstoffphase in Bereichen, in welchen Faserbündel 16 und/oder Faserfilamente 19 angeordnet sind, vorhanden ist, ist eine Oxidationsanfälligkeit des Materials minimiert. Daraus resultiert eine hohe Korrosionsbeständigkeit des Faserverbundmaterials 35 beziehungsweise des carbidkeramischen Bauteils 50. Ferner erhält man aufgrund eines höheren Volumenanteils an Carbid-Matrix 20 - aufgrund der fehlenden oder nur gering vorhandenen freien Kohlenstoffphase - eine höhere Wärmeleitfähigkeit und eine größere Härte als in Materialien mit freier Kohlenstoffphase.

Es ergibt sich eine hohe Biegefestigkeit im Biegeversuch von 150 MPa oder mehr. Beispielsweise lässt sich eine Biegefestigkeit von circa 200 MPa erreichen.

Es ergibt sich ferner eine hohe Bruchdehnung von circa 0,3 %.

Das hergestellte Material mit Silizium als Carbidbildner ist ein C/SiC-Material. Die Bruchdehnung ist vergleichbar mit der eines C/C-SiC-Materials (vgl. Figuren 3 und 4).

In den erstgenannten Materialien steht das erste "C" für die Kohlenstofffasern. In dem zweitgenannten Material steht ein "C" für die Kohlenstofffasern und ein "C" für die freie Kohlenstoffphase, welche bei dem erfindungsgemäßen Faserverbundmaterial 35 im Wesentlichen nicht vorhanden ist.

Ein carbidkeramisches Bauteil 50 aus oder umfassend ein Faserverbundmaterial 40, welches nach dem erfindungsgemäßen Verfahren hergestellt wurde, lässt sich beispielsweise vorteilhafterweise als Bremsscheibe oder als Wiedereintrittschild verwenden.

### Bezugszeichenliste

- 10: Faserverstärkung
- 12: 0°-Orientierung
- 14: 90°-Orientierung
- 16: Faserbündel
- 18: freier Carbidbildner
- 19: Faserfilament
- 20: Carbid-Matrix
- 22: Kohlenstoffphase
- 24: Carbid-Matrix
- 26: Poren
- 30: Partikel
- 32: granulares Material
- 35: poröser Faservorkörper
- 40: Faserverbundmaterial
- 42: Ausgangsmaterial
- 45: Fasern
- 46: Lösungsmittel
- 48: Polymerharz
- 49: Carbidbildner
- 50: carbidkeramisches Bauteil
- B: Faserdurchmesser
- D: Porendurchmesser

## Patentansprüche

1. Verfahren zur Herstellung eines carbidkeramischen Faserverbundmaterials (40), das Verfahren umfassend:
- Infiltrieren einer Fasereinrichtung mit einem Lösungsmittel (46), wobei die Fasereinrichtung Fasern (45) und ein Polymerharz (48) umfasst und wobei das Lösungsmittel (46) einen Siedepunkt aufweist, welcher größer ist als eine Polymerisationstemperatur des Polymerharzes (48);
- Durchführen einer Pyrolyse an der mit dem Lösungsmittel (46) infiltrierten Fasereinrichtung, wobei ein poröser Faservorkörper (35) hergestellt wird; und
- Durchführen einer Carbidbildner-Infiltration an dem porösen Faservorkörper (35), wobei ein Faserverbundmaterial (40) entsteht, dessen Faserfilamente (19) und/oder Faserbündel (16) in einer Carbid-Matrix (20) angeordnet sind.

2. Verfahren nach Anspruch 1, **dadurch gekennzeichnet, dass** das Lösungsmittel (46) ein Alkohol, insbesondere Furfurylalkohol, Isopropanol oder eine Mischung daraus, ist und/oder dass ein Massenanteil des Lösungsmittels (46) in einem Ausgangsmaterial (42) für den porösen Faservorkörper (35), umfassend die Fasereinrichtung und das Lösungsmittel (46), mindestens 10 % beträgt.

3. Verfahren nach einem der vorangehenden Ansprüche, **dadurch gekennzeichnet, dass** die Fasern (45) mit dem Polymerharz (48) und dem Lösungsmittel (46) infiltriert werden und eine Aushärtungsreaktion des Polymerharzes (48), insbesondere unter Druck, durchgeführt wird.

4. Verfahren zur Herstellung eines carbidkeramischen Faserverbundmaterials (40), das Verfahren umfassend:
- Herstellen eines porösen Faservorkörpers (35) unter Verwendung eines kohlenstoffhaltigen granularen Materials (32) und Fasern (45), wobei das kohlenstoffhaltige granulare Material (32) und die Fasern (45) pyrolysiert werden; und
- Durchführen einer Carbidbildner-Infiltration an dem porösen Faservorkörper (35), wobei ein Faserverbundmaterial (40) entsteht, dessen Faserfilamente (19) und/oder Faserbündel (16) in einer Carbid-Matrix angeordnet sind.

5. Verfahren nach Anspruch 4, **dadurch gekennzeichnet, dass** das kohlenstoffhaltige granulare Material (32) ein Pulver ist und insbesondere eines oder mehrere der folgenden Materialien in Pulverform umfasst oder daraus gebildet ist: Siliziumcarbid, Aktivkohle
und/oder
dass das kohlenstoffhaltige granulare Material (32) als lose Schüttung um die Fasern (45) herum angeordnet wird, bevor die Pyrolyse durchgeführt wird.

6. Verfahren nach einem der vorangehenden Ansprüche, **dadurch gekennzeichnet, dass** zwischen den Faserfilamenten (19) und/oder Faserbündeln (16) in dem Faserverbundmaterial (40) im Wesentlichen keine freie Kohlenstoffphase (22) vorhanden ist und/oder dass der poröse Faservorkörper (35) als Schwammkörper oder Schaumkörper und insbesondere als Nanoschwammkörper oder Nanoschaumkörper hergestellt wird.

7. Verfahren nach einem der vorangehenden Ansprüche, **dadurch gekennzeichnet, dass** eine Vereinzelung von Faserfilamenten (19) einer Faserverstärkung (10) stattfindet und/oder dass Faserfilamente (19) in dem resultierenden carbidkeramischen Faserverbundmaterial (40) erhalten bleiben.

8. Verfahren nach einem der vorangehenden Ansprüche, **dadurch gekennzeichnet, dass** eine Porosität des porösen Faservorkörpers (35) mindestens 10 Volumen-%, insbesondere mindestens 15 Volumen-%, insbesondere mindestens 20 Volumen-%, beträgt, bezogen auf ein Gesamtvolumen des porösen Faservorkörpers (35), insbesondere ohne einen Volumenanteil einer Faserverstärkung (10).

9. Verfahren nach einem der vorangehenden Ansprüche, **dadurch gekennzeichnet, dass** der poröse Faservorkörper (35) Poren (26) mit einem mittleren Porendurchmesser (D) umfasst, welcher kleiner oder gleich 20 µm ist und insbesondere kleiner oder gleich 15 µm ist und insbesondere kleiner oder gleich 10 µm ist und/oder dass ein mittlerer Porendurchmesser (D) im porösen Faservorkörper (35) mindestens näherungsweise kleiner als ein Faserdurchmesser (B) ist oder mindestens näherungsweise dem Faserdurchmesser (B) entspricht.

10. Verfahren nach einem der vorangehenden Ansprüche, **dadurch gekennzeichnet, dass** die Fasern (45) durch Faserbündel (16) mit einer Mehrzahl von Faserfilamenten (19) hergestellt werden.

11. Verfahren nach einem der vorangehenden Ansprüche, **dadurch gekennzeichnet, dass** die Fasern (45) ein Gewebe, ein Gelege, ein Gewirke und/oder Kurzfasern umfassen, und insbesondere aus Faserbündeln (16) mit einer Mehrzahl von Faserfilamenten (19) zusammengesetzt sind.

12. Verfahren nach einem der vorangehenden Ansprüche, **dadurch gekennzeichnet, dass** als Carbidbildner (49) Silizium verwendet wird.

13. Carbidkeramisches Bauteil (50), wobei das carbidkeramische Bauteil (50) ein Faserverbundmaterial (40), welches nach einem Verfahren nach einem der Ansprüche 1 bis 12 hergestellt ist, umfasst oder daraus besteht.

14. Carbidkeramisches Bauteil (50) nach Anspruch 13, **dadurch gekennzeichnet, dass** das carbidkeramische Bauteil (50) eine Biegefestigkeit von mindestens 150 MPa aufweist.

15. Carbidkeramisches Bauteil (50) nach Anspruch 13 oder 14, **dadurch gekennzeichnet, dass** das carbidkeramische Bauteil (50) eine Bruchdehnung im Biegeversuch von mindestens 0,15 % aufweist.
